(19) Europäisches Patentamt

European Patent Office

Office européen des brevets

(11) Veröffentlichungsnummer: **0 256 198**

. **A2**

(12) # EUROPÄISCHE PATENTANMELDUNG

(21) Anmeldenummer: 86830317.3

(22) Anmeldetag: 31.10.86

(51) Int. Cl.⁴: **B60R 25/00**

Die Bezeichnung der Erfindung wurde geändert (Richtlinien für die Prüfung im EPA, A-III, 7.3).

(30) Priorität: 18.07.86 IT 3594586 U

(43) Veröffentlichungstag der Anmeldung:
24.02.88 Patentblatt 88/08

(84) Benannte Vertragsstaaten:
AT BE CH DE FR GB LI LU NL SE

(71) Anmelder: **O.M.E. Officine Melchiorri Ermanno
Viale Tirreno, 205
I-00141 Roma(IT)**

(72) Erfinder: **Melchiorri, Ermanno
Viale Tirreno, 205
I-00141 Roma(IT)**

(74) Vertreter: **Sneider, Massimo
Lenzi & C. Via Lucania, 13
I-00187 Roma(IT)**

(54) **Vorrichtung zum Verhindern des Diebstahls der Ersatzräder von Kraftfahrzeugen.**

㊼ Die Vorrichtung, welche geeignet ist den Diebstahl der Ersatzräder von Kraftfahrzeugen zu verhindern, besteht im wesentlichen aus zwei kleinen Blöcken (1) und (2), einem vom Blöckchen (1) getragenen Bolzen (3) und einer auf den Schraubenbolzen (3) aufschraubbaren Mutter (4), wobei zumindest eines der beiden Blöckchen (1 oder 2), vorzugsweise beide, mit einer Aushöhlung (5), oder (5 und 6), versehen sind, um bei gegenübergestellten Blöckchen ein Gehäuse zu definieren, in dem der Rand (9) des Randhalterkorbes eine Aufnahme findet.

Bei einer Abwandlung ist ein Bolzen oder verlängerter Körper (21) derart geformt, um die Flanke des Rades zu umfassen, indem er sich einenendes an diesem und anderenendes an einem vorbestimmten Punkt der Karosserie bindet, wobei zur Bindung der Vorrichtung am Rad ein Ende derselben in eines der Löcher für die Belüftung der Bremsvorrichtung oder für die Befestigung des Rades eingeführt wird, während das andere Ende am Glied gebunden ist, das vorsieht den verlängerten Körper an der Karosserie zu sichern.

**"Zum Verhindern des Diebstahles der Ersatzräder von Kraftfahrzeugen geeignete Vorrichtung"**

Die Erfindung betrifft eine Vorrichtung, welche geeignet ist den Diebstahl der Ersatzräder von Kraftfahrzeugen zu verhindern.

Es ist allgemein bekannt, dass jedes Kraftfahrzeug mit einem Reserverad versehen ist und dass dieses Rad normalerweise innerhalb der Karosserie das Fahrzeuges oder ausserhalb derselben in einem eigens dazu bestimmten Korb untergebracht ist.

Es wurden verschiedenartige Mittel vorgeschlagen, um den Diebstahl des Reserverades zu vermeiden, wenn dieses unterhalb des Kofferraumes in einem Korb untergebracht ist, welcher gemeinsam mit dem Rad oszilliert, wenn letzteres abgenommen oder wieder an Ort und Stelle gebracht wird. Die bekannten Vorrichtungen beruhen vorallem auf Mitteln, wie Kette mit dazu gehörigem Vorhängeschloss, welche den Korb bei verstautem Ersatzrad an der Karosserie sichern.

Weiters wurde bisher kein Schutz für innerhalb der Karossierie untergebrachte Ersatzräder vorgeschlagen, sei es dassletztere im Kofferraum oder im Motorraum gelagert sind.

Es herrscht somit eine immer grössere Nachfrage nach Mittel, um zu versuchen den Diebstahl der Ersatzräder zu verhindern oder wenigstens - schwieriger zu gestalten.

Ein Gegenstand der vorliegenden Erfindung ist ein insbesondere für ausserhalb am Fahrzeug angeordnete Räder geeigneterDiebstahlschutz, welcher den vorbeklagten Übelständen zuvorkommt und gestattet eine angemessene Sicherheit gegen eine etwaige Entwendung zu erzielen.

Ein weitere Gegenstand der vorliegenden Erfindung ist eine zum Verhindern des Diebstahles der Ersatzräder geeignete Vorrichtung, sei es dass dieselben ausserhalb oder innerhalb des Fahrzeuges untergebracht sind, welche verhindert, dass mit dem Schnitt des Korbes oder mit dem Aufbruch des Raumes, in welchem das Rad gelagert ist, der Dieb sich das Rad aneignen kann.

Nach einer ersten Ausführungsform besteht die Vorrichting im wesentlichen aus zwei kleinen Blöcken, wobei vorzugsweise jeder mit einer vorzugsweise halbzylindrischen Aushöhlung versehen ist, welche bei gegenübergestellten Blöckchen einen an den Enden offenen Hohlraum bestimmen, in welchem der Rand oder ein anderer Teil des Radhalterkorbes eine Aufnahme findet. Das untere Blöckchen trägt einen zumindest teilweise geschnittenen Bolzen, welcher das gegenübergestellte obere Blöckchen und die Plattform oder eine andere Zone des Fahrzeuges durchquert, wobei die Blockierung des Rades an diesem Karosserieteil mittels einer gegebenenfalls mit einem Schloss oder einem anderen geeigneten Mittel versehenen Mutter ermöglicht wird.

Nach einer zweiten Ausführungsform ist der Bolzen der vorstehenden Lösung aus einem verlängerten, passend fassonierten Körper gebildet, welcher zweckdienlich in das Reserverad eingeführt wird, wobei die Blockierung an einem ortsfesten Teil der Karosserie mittels einer Mutter, eines Riegels, eines Schlosses, eines Vorhängeschlosses oder dergleichen ermöglicht wird, und damit die Entwendung des Rades verhindert.

Nach dieser Ausführung ist der Bolzen oder Körper verlängerter Form, vorzugsweise ein Stab aus gehärtetem Stahl oder anderem mittels Schere oder dergleichen nicht leicht angreifbarem Material, derart geformt, um die Flanke des Rades zu umfassen, indem er sich einenendes an diesem und anderenendes an einem vorbestimmten Punkt der Karosserie bindet. Zur Bindung der Vorrichtung am Rad wird ein Ende derselben, nachstehend das freie Ende genannt, in eines der Löcher eingeführt, mit denen die Felge für die Belüftung der Bremsvorrichtung oder für die Befestigung des Rades versehen ist, während das andere Ende am Glied gebunden ist, das vorsieht den verlängerten Körper an der Karosserie zu sichern, wie auch immer dieses Glied zusammengesetzt sein mag.

Bezugnehmend auf die anliegenden Zeichnungen wird die Erfindung beim Lesen der nachstehenden ausführlichen Beschreibung von beispielsweisen Ausführungsformen des Diebstahlschutzes verständlicher sein. In den Zeichnungen selbst zeigen:

Fig. 1 den Diebstahlschutz nach einer ersten Ausführungsform in Schliessstellung;

Fig. 2 die Vorrichtung gemäss Fig. 1 in offener Stellung;

Fig. 3 ein Blockiermittel der Vorrichtung nach den vorstehenden Figuren;

Fig. 4 eine Seitenansicht der Vorrichtung gemässe einer Abwandlung;

Fig. 5 eine Draufsicht der Vorrichtung nach Fig. 4 in der gebundenen Lage des Rades mit einem Blöckchenendverschluss;

Fig. 6 schematisch einen anderen Endverschluss der Vorrichtung nach Fig. 4.

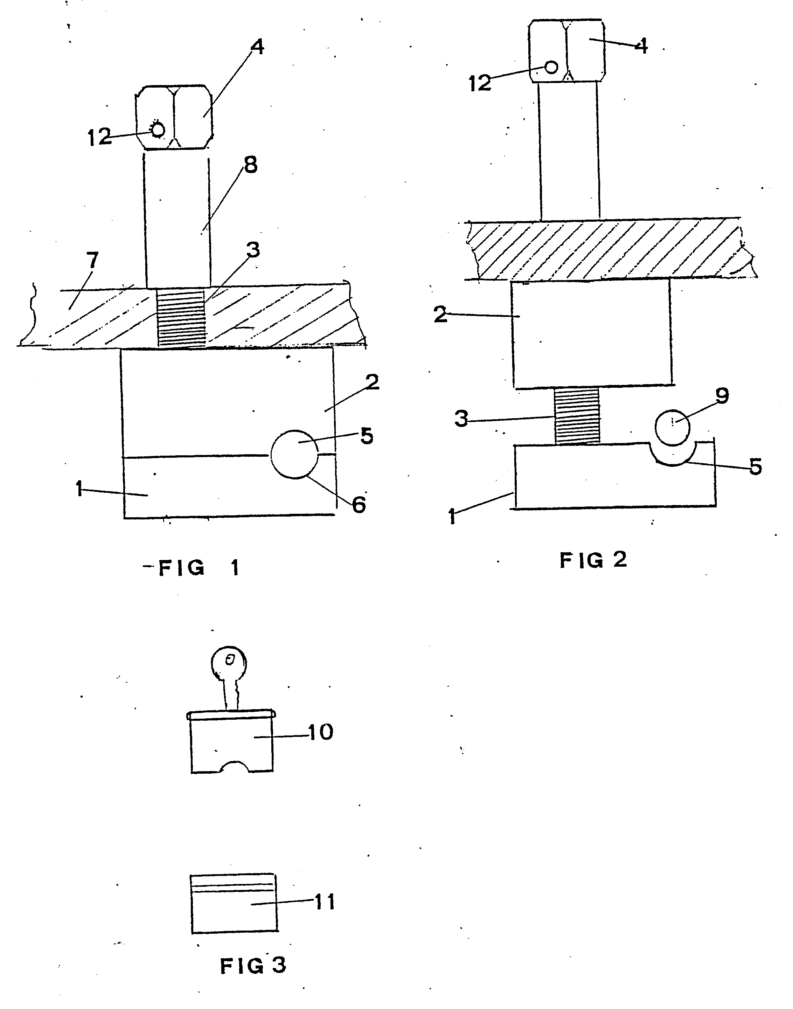

Bezugnehmend auf die Zeichnungen, u.zw. insbesondere auf die Figuren 1 bis 3, ist der Diebstahlschutz im wesentlichen aus einem Blöckchen 1, nachstehend als unteres Blöckchen definiert, einem Blöckchen 2, nachstehend als oberes Blöckchen bezeichnet, einem vom unteren Blöckchen 1 getragenen vertikalen Bolzen 3 und einer auf den Schraubenbolzen 3 aufschraubbaren Mutter 4 zusammengesetzt.

Zumindest eines der beiden Blöckchen 1 oder 2, vorzugsweise beide, sind mit einer Aushöhlung 5, oder 5 und 6 versehen, um bei gegenübergestellten Blöckchen ein Gehäuse zu definieren, in dem der Rand 9 des Radhalterkorbes eine Aufnahme findet.

Durch Aufschrauben der Mutter 4 auf den vom unteren Blöckchen 1 getragenen und das obere Blöckchen 2 frei durchquerenden Schraubenbolzen 3 haben die beiden Blöckchen die Neigung den Rand 9 des Radhalterkorbes zu umschlingen und untereinander und an der unteren Oberfläche z.B. die Mutter 4 zur Auflage kommt, welche durch einen zylindrischen Körper 8 gegebenenfalls verlängert sein kann, um die für deren Bedienung erforderliche Höhe zu erlangen.

Um das Rad freizugeben genügt es, die gegenseitige Klemmung der beiden kleinen Blöcke untereinander und gegen die Karosserie zu lockern, wobei auf die Mutter 4 eingewirkt wird bis ein Ausrasten des Randes 9 des Radhalterkorbes ermöglicht ist.

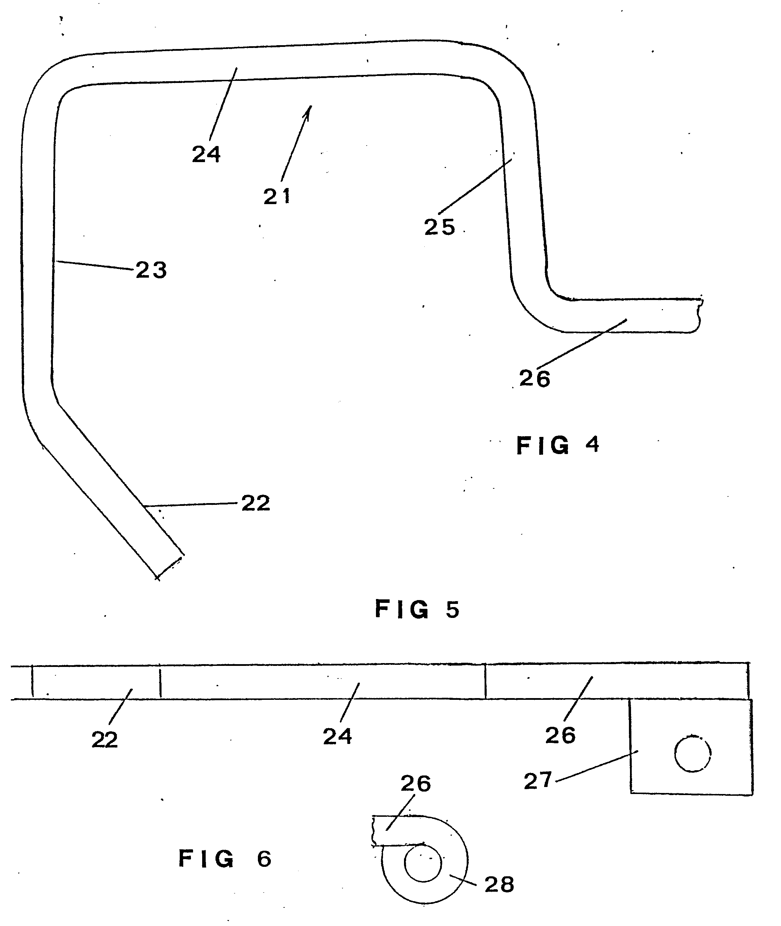

Die Mutter 4 kann auch mit einem Sicherheitsschloss versehen sein (Fig. 3). Sie kann mit einem Querbolzen 12 versehen sein, mit dem ein in der Figur nicht sichtbarer, im Schlosszylinder 10 gelagerter Riegel in Eingriff kommt, welcher dann mit einem Ring 11 verkleidet ist, welcher am Zylinder selbst frei drehbar und assial oberhalb von einem zweckdienlichen Rand des Schlosszylinders 10 und unterhalb vom Klemmbolzen gebunden ist.

Bei der weiteren, in den Figuren 4 bis 6 veranschaulichten Ausführungsform ist die erfindungsgemässe Vorrichtung aus einem ganz allgemein mit der Bezugsnummer 21 angegebenen verlängerten Element zusammengesetzt, welches in Abschnitte unterschiedlicher Länge und Neigung gebogen ist.

Ausgehend vom wie vorstehend angegebenen freien Ende hat der Körper 21 einen ersten Abschnitt 22, welcher mit dem nachfolgenden Abschnitt 23 einen Winkel grösser als 45°, vorzugsweise von ungefähr 60°, einschliesst, wobei der Abschnitt 23 mit dem anschliessenden Abschnitt 24 seinerseits einen Winkel ein wenig grösser als 90° bildet.

Auch die Abschnitte 24 und 25 sind gegenseitig derart abgebogen, um untereinander einen Winkel ein wenig grösser als 90° einzuschliessen. Die Strecken, d.h. die Abschnitte 23 und 25 sind somit nicht parallel zueinander, sondern leicht auseinandergehend.

Der Abschnitt 25 des verlängerten Körpers 21 endet mit einem Endstück 26, welches an seinem Ende das Bindeorgan des Körpers 21 an der Karosserie unmittelbar oder mittelbar ortsfest hält.

Der verlängerte Körper 21 ist mit anderen Worten derart fassoniert, dass sein erster Abschnitt 22 in eines der Löcher der Felge eintreten kann, wobei er im wesentlichen über seine gesamte Länge in dem Teil des Rades zu lagern kommt, welcher zur Karosserie gewandt ist, während der Abschnitt 23 die Breite des Rades umgreift und der Abschnitt 24 vom inneren Rand der Felge bis zur Peripherie des Rades reicht. Der Abschnitt 25 umgreift den Laufstreifen des Reifens für die Strecke desselben, welche gegenüber der Ebene der Karosserie vorspingt, an der die Vorrichtung gebunden werden muss.

Das Rad ist somit an der Karosserie gemäss eines seines Durchmessers gebunden und kann in Anbetracht der gegenseitigen Abwinklung der verschiedenen Abschnitte der Vorrichtung 21 auch durch vielfältiges Neigen desselben gegenüber der Karosserie von der Vorrichtung nicht freigemacht werden.

In der Fig. 5 ist die Vorrichtung in ihrem angewandten Gesamtprofil gezeigt, wobei ein Diebstahlschutzzylinder 27 der vorstehend erläuterten Art vorgesehen ist.

Die Fig. 6 zeigt in übereinstimmender Weise einen Endverschluss des Abschnittes 26 der Vorrichtung 21, bei dem eine Öse 28 vorgesehen ist, welche geeignet ist die Anwendung eines Vorhängeschlosses zu gestatten. Die Klemmorgane mittels Schlüssel können natürlicherweise beliebiger geeigneter Art sein.

Die mit dem erfindungsgemässen Diebstahlschutz erzielten Vorteile sind somit offensichtlich aus der vorstehenden Beschreibung. Es ist insbesondere hervorzuheben, dass die Installation der Vorrichtung in der einen oder anderen Ausführungsform mit relativem Schutz des Rades bei jeder Art der Unterbringung des Ersatzrades möglich ist, wobei diese Installation rasch und ohne die Notwendigkeit besonderer Massnahmen vonseiten des Gebrauchers erfolgt. Andererseits wird sich der Dieb in der Lage befinden für den Diebstahl aussergewöhnlich viel Zeit zu benötigen, und es ist ja gerade die Zeit die ausschlaggebende Ursuche zum Verüben einer solchen Übeltat.

Die Erfindung wurde nur beispielsweise beschrieben und erläutert. Dieselbe kann natürlich abgewandelt werden in ihrer Form, in der Fertigbehandlung, in den Abmessungen und in allen Einzelheiten, welche das Wesen derselben nicht verändern, umgestalten oder abändern.

**Ansprüche**

1.)Zum Verhindern des Diebstahles der Ersatzräder von Kraftfahrzeugen geeignete Vorrichtung, dadurch gekennzeichnet, dass dieselbe im wesentlichen aus einem Blöckchen (1), oder unterem Blöckchen, aus einem Blöckchen (2), oder oberem Blöckchen, aus einem vom unteren Blöckchen (1) getragenen vertikalen Bolzen (3) und aus einer auf den Schraubenbolzen (3) aufschraubbaren Mutter (4) besteht, wobei zumindest eines der beiden Blöckchen (1 oder 2), vorzugsweise beide, mit einer Aushöhlung (5), oder (5 und 6), versehen sind, um bei gegenübergestellten Blöckchen ein Gehäuse zu definieren, in dem der Rand (9) des Radhalterkorbes eine Aufnahme findet.

2.)Zum Verhindern des Diebstahles der Ersatzräder von Kraftfahrzeugen geeignete Vorrichtung, nach Anspruch 1, dadurch gekennzeichnet, dass ein zylindrischer Körper (8) vorsieht die Mutter (4) im Bedarfsfall zu verlängern und ein Sicherheitsschloss die Mutter vor einem Aufbruch - schützt.

3.)Zum Verhindern des Diebstahles der Ersatzräder von Kraftfahrzeugen geeignete Vorrichtung, dadurch ge kennzeichnet, dass dieselbe im wesentlichen aus einem verlängerten, passend fassonierten Körper (21) besteht, welcher zweckdienlich in das Ersatzrad eingeführt die Blockierung an einem ortsfesten Teil der Karosserie mittels einer Mutter, eines Riegels, eines Schlosses, eines Vorhängeschlosses oder dergleichen gestattet.

4.)Zum Verhindern des Diebstahles der Ersatzräder von Kraftfahrzeugen geeignete Vorrichtung, nach Anspruch 3, dadurch gekennzeichnet, dass der Körper verlängerter Form (21), vorzugsweise ein Stab aus gehärtetem Stahl, derart geformt ist, um die Flanke des Rades zu umfassen, indem er sich einenendes an diesem und anderenendes an einem vorbestimmten Punkt der Karosserie bindet, wobei zur Bindung der Vorrichtung am Rad ein Ende derselben in eines der Löcher für die Belüftung der Bremsvorrichtung oder für die Befestigung des Rades eingeführt wird, während das andere Ende am Glied gebunden ist, das vorsieht den verlängerten Körper an der Karosserie zu sichern, wie z.B. die Vorrichtung nach Anspruch 1 und 2.

5.)Zum Verhindern des Diebstahles der Ersatzräder von Kraftfahrzeugen geeignete Vorrichtung, nach Anspruch 4, dadurch gekennzeichnet, dass der verlängerte Körper (21) einen ersten mit dem Rad gebundenen Abschnitt (22) aufweist, welcher mit dem nachfolgenden Abschnitt (23) einen Winkel grösser als 45°, vorzugsweise von ungefähr 60°, einschliesst, wobei die anschliessenden Abschnitte (24 und 25) ihrerseits zwischen jedem Paar von diesen einen Winkel ein wenig grösser als 90° einschliessen und jedes Paar von gegenübergestellten Abschnitten leicht auseinandergehend ist.

6.)Zum Verhindern des Diebstahles der Ersatzräder von Kraftfahrzeugen geeignete Vorrichtung, nach den vorstehenden Ansprüchen, dadurch gekennzeichnet, dass der verlängerte Körper (21) mit einem Endstück (26) endet, welches an seinem Ende das Bindeorgan des Körpers selbst an der Karosserie unmittelbar oder mittelbar ortsfest trägt.

FIG 1

FIG 2

FIG 3

FIG 4

FIG 5

FIG 6